# EUROPEAN PATENT APPLICATION

(11) **EP 0 592 718 A1**
(43) Date of publication of application: **20.04.1994**
(21) Application number: 92117676.4
(22) Date of filing: 16.10.1992
(51) Int. Cl.: A45C 13/10, E05B 73/00, A45C 3/04

(54) **Inaccessible security sack-bag for admission free department stores**

(71) Applicant: Michelini, Salvatore, I-40129 Bologna (IT); Agostini, Stefano, I-40065 Pianoro (Bologna) (IT)
(72) Inventor: Michelini, Salvatore, I-40129 Bologna (IT); Agostini, Stefano, I-40065 Pianoro (Bologna) (IT)
(74) Representative: Sassatelli, Franco T., Dr.

(57) **Abstract**

It foresees a magnetic closing sack-bag (1) inaccessible by the client with upper opening (2) to be closed with zip (3) having its moving element (4) of the tab (5) connected by a rivet (6) with a linear grip part (7). Said grip part (7) foresees, coming out on other its end, a metal point (8) to come inserted during closing into the bore (9) of the blocking part (10) with incorporated magnetic unit integral with the sack-bag (1) by its arm (11) into seat (12) with blocking given by rivet (13) on the reinforcement (14). For the sack-bag use when coming into the department store it is foreseen that bags and/or things that the client brings with him were put into the sack-bag (1) which, opportunely closed by an agent, is given to the same client who can enter into the exposition area bringing with him his own things but without having the possibility to use the same. After having visit the exposition area and before paying goods eventually bought the client will give the sack-bag (1) to an other agent who by means of a demagnetizer (15) will defus the magnetic blocking permitting to take out the things contained into the sack-bag (1) while the same sack-bag will be taken by the same agent.

## Description

The invention refers to a security sack-bag for admission free deparment stores which principally permits, to whomever already brings with him other things and/or other bags, to go into the store without to be subject to the forced depositing of his things at the entrance. In the admission free department stores come to arise the problem to prevent the theft of the exposed goods which, as indicated in the statistics, come to constitue a heavy operating loss. Actually the exposed goods are foreseen inside a sheltered area into which is possible to have access after having got over delimited barriers and where the management reserves the right to make various checks and to make justified actions on the person.

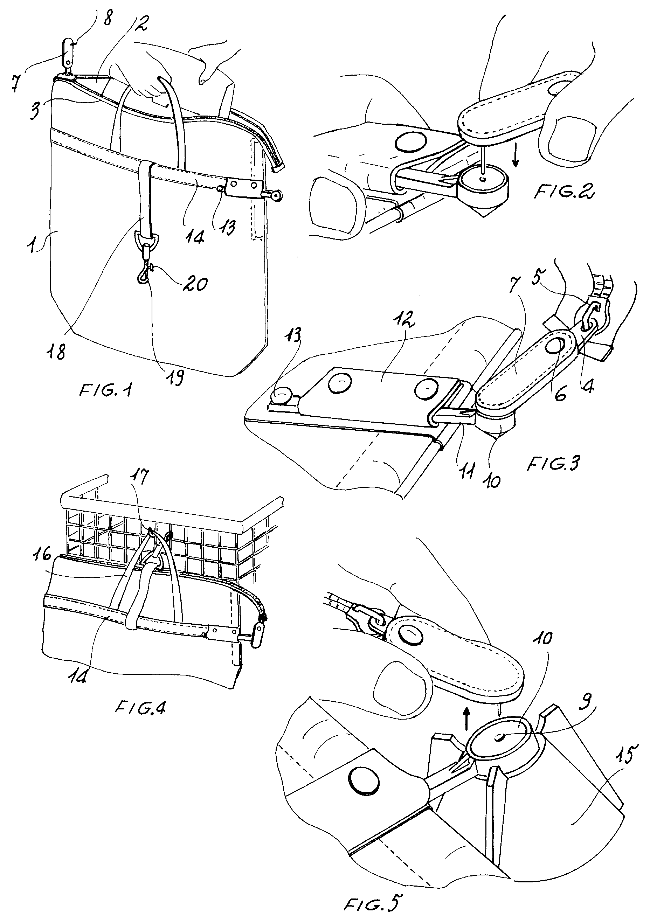

But the presence of a lot of exposed goods and the untidy flow of the clients which comes to form can, particularly in the rush hours into the passages owing to the bustle of clients which are going to look and to take the desired goods from the shelves foreseen generally at various height orders, act as theft incitement. Owing to the impossibility also using telecameras shooting the passages to have under continuous check so many clients a current antitheft method, aiming to reduce the objectived theft possibilities, permits at the clients to have access into the protected area only without any kind of container so to avoid the possibility that eventually abstracted goods were hidden into containers that the client already brought with him. And since the client at least brings with him a container such as a handbag, a gentleman's handbag or a shopping-basket with goods bought in other shops, he must leave all these bags in an apposite space near the exposition area under the check and the responsability of the store management before going into the exposition area. Consequently it is necessary for the store management foresees a cloak-room service which provides to hold the above said containers and to give fitting countermark for the return when the client goes out. Alternatively the various containers can be put by the same client into small cupboard with own fastening then brought with him the key so to can hold again all things before going out from the store. For the admission free deparments store in the first said method is necessary to arrange a space for holding and returning the various things and containers which comes to create some problems such employ of extra staff and extra controlled space, otherwise advantageously to be used, the responsability of the kept things and possible objections of the clients. In the second said method is always necessary to foresee a suitable area, furniture and extra staff but it comes to avoid the responsability of the kept things and the objections as the client keeps with him the key for opening the cupboard. For the client in the first method arises the bouble drawback to be subject to the delivey and withdrawal operations and to the inconvenience to must give to a third person his own things. The second method comes to avoid the above cited operations and also the inconvenience to give to anybody else the own things but the client must go two times, at the entrance and at the going out, in the area where are the cupboards: the first time for putting his own things into one of the available hollows and for closing the door keeping on him the key, and the second time for opening again the door, bringing his things and for delivering to an agent or otherwise leaving the key. It is particular to point out that at the inconvenience coming from said operations is necessary to add, at least for a part of the usual clients of said kind of stores, the real difficulty to provide for all these operations. On the other hand leaving his own containers at client disposal, actually by magnetic bearing is only noticed what eventually has been hidden in them, referring tho the goods own of the store if equipped with magnetic means to the getting over of the exit-sill foreseen farther the check-out counter. Whereas to order to the client his bag opening is necessary an eye-witness who justified the check, moreover this kind of operation is not positive for the store image and it can be prejudicial for the client. This method moreover makes to come in the magnetic bearing all the check possibilities whereas nothing is foreseen to make precautionary measures against a possibile theft dissuading the person from using his container to hide somewhat. With said magnetic bearing it is leaded the potential thieving to try to tamper the goods to make ineffectual the bearing system so creating various kind of problems both for the exposed goods than for the necessity to must proceed to the regrettable operation to make open the client bags. The invented security sack-bag permits the complete problem solution by means of a new method which permits at the client to go into the store area bringing with him own things and own bags, with which he was entered into the store, placed into a big inaccessible sack-bag which is then opened again before the payment of the bought goods on the exit-sill by an agent who withdrawns the store bag and in the same time gives to the client his own things. The invented means in first way acts as dissuasion means, since it is greatly limiting of the theft possibility as coming to be asent the possibility to hide the stolen goods into containers at the ill-intentioned person remains only the possibility to hide the goods on himself. Moreover for the department store the invented means permits to limit the staff presence only during the bag closing, before entering in the exposition area, and during the bag opening for the re-delivery of the bag contents before payment of the bought goods. For the client the invented means avoids to must give and then withdrawn the things he had with him when entering in the department store so avoiding drawbacks. The invented means foresees a container with magnetic closing inaccessible by the client essentially characterized by a sack-bag 1 with upper opening 2 to be closed with zip 3 having its moving element 4 of the tab 5 connected by a rivet 6 with a linear grip part 7. Said grip part 7 foresees, coming out on other its end, a metal point 8 to come inserted during closing into the bore 9 of the blocking part 10 with incorporated magnetic unit integral with the bag by its arm 11 into seat 12 with blocking given by rivet 13 on the reinforcement 14. For the sack-bag use when coming into the department store it is foreseen that bags and/or things that the client brings with him were put into the sack-bag 1 which, opportunely closed by an agent, is given to the same client who can enter into the exposition area bringing with him his own things but without having the possibility to use the same. After to have put the client bags and/or things into the sack-bag 1 the agent closes the same initally closing the zip 3, by means of the grip part 7, and then the agent introduces the metal point 8, foreseen onto the other end of the grip part 7, into the bore 9 of the blocking part 10 whose incorporated magnetic unit keeps itself in this position without the possibility to open the sack-bag 1. The client after having visit the exposition area and before paying goods eventually bought will give the sack-bag 1 to an other agent who by means of a demagnetizer 15 will defus the magnetic blocking permitting to take out the things contained into the sack-bag 1 while the same sack-bag will be taken by the same agent. The sack-bag 1 is taken by couple of handles 16 and it is hung to the normal shopping trolley by hook 17. To avoid the theft of the sack-bag 1 with the bags and/or things of the client and to avoid that a third person changed a sack-bag on a shopping trolley with another one, it is centrally foreseen, applied on the reinforcement 14, an extra piece 18 equipped with a spring-catch 19 with push-button 20 to permit the security tie by its connection to the shopping trolley net-work. An embodiment of the invented security sack-bag is illustrated in drawings of sheet 1. In this sheet fig. 1 is view of the opened sack-bag 1 while is introduced into it a handbag. It is showed the opened zip 3 and the grip part 7 raising to show the coming out metal point 8. Fig. 2 is perspective particular view of the preparatory phase to the magnetic closing of the sack-bag 1. Fig. 3 is perspective particular view of the magnetic blocking condition which blocks the grip part 7 with the blocking part 10. Fig. 4 is partial view of a shopping trolley to show the contemporary support of the sack-bag 1 on the same shopping trolley on hook 17 and of the security tie by means of the spring catch 19. Fig. 5 in perspective particular view of the demagnetizing phase by the demagnetizer 15. The sack-bag 1 can be foreseen in different sizes and materials and also the blocking and attaching means can be differently foreseen.

## Claims

1. Inaccessible security sack-bag for admission free department stores foreseen a sack-bag (1) with upper opening (2) with zip (3) having the moving element (4) of the tab (5) connected with the grip part (7), where said grip part (7) foresees on its other end a metal point (8) to be inserted into the bore (9) of the blocking part (10) with magnetic unit integral with the sack-bag (1) by means of its arm (11) characterized in that introduced the client own things into it the agent closes it initially bringing in closing the zip (3) by means of the grip part (7) and then introduces the metal point (8), foreseen on the other end of the grip part (7), into the bore (9) of the blocking part (10) whose incorporated magnetic unit keeps itself in this position without the possibility to open the sack-bag (1); after having visit the exposition area and before paying the goods eventually bought the client will give the sack-bag (1) to an other agent who by means of a demagnetizer (15) will defus the magnetic blocking permitting to take out the things contained into the sack-bag (1) while the same sack-bag (1) will be taken by the same agent.

2. Inaccessible security sack-bag (1) as in claim 1 where it is taken by couple of handles (16) and it is hung to the normal shopping trolley by a hook (17).

3. Inaccessible security sack-bag (1) as in claim 1 where to avoid its theft with the bags and/or things of the client and to avoid that a third person changed a sack-bag (1) on a shopping trolley with another one it is centrally foreseen, applied on the reinforcement (14), an extra piece (18) equipped with a spring-catch (19) with push-button (20) to permit the security tie by its connection to the shopping trolley net-work.
